# EUROPÄISCHE PATENTSCHRIFT

(11) **EP 0 436 071 B1**
(45) Veröffentlichungstag und Bekanntmachung des Hinweises auf die Patenterteilung: **02.06.1993**
(21) Anmeldenummer: 90117457.3
(22) Anmeldetag: 11.09.1990
(51) Int. Cl.: A47J 43/12, A01J 13/00

(54) **Vorrichtung zum Erzeugen von Schlagsahne aus Flüssigsahne**
Device for preparing whipped cream from liquid cream
Appareil pour préparer de la crème fouettée à partir de la crème liquide

(30) Priorität: 28.12.1989 DE 8915220 U
(43) Veröffentlichungstag der Anmeldung: 10.07.1991
(73) Patentinhaber: Kümmerling, Josef, D-77815 Bühl (DE)
(72) Erfinder: Kümmerling, Josef, D-77815 Bühl (DE)
(74) Vertreter: Zipse + Habersack

(56) Entgegenhaltungen:
- DE-A- 1 809 087
- FR-A- 1 538 759
- US-A- 3 854 700
- US-A- 4 766 739

## Beschreibung

Die Erfindung betrifft eine Vorrichtung zum Erzeugen von Schlagsahne aus Flüssigsahne, bestehend aus einem Rahmengehäuse mit einem ersten Raum zur Aufnahme der Kühlaggregate und der elektrischen Schalt- und Steuereinrichtungen und einem mit Kälteübertragungseinrichtungen, z. B. Kühlschlangen, versehenen zweiten Raum zur Aufnahme eines Kessels für die kühlzuhaltende, flüssige Sahne und einem mit diesem über eine Leitung verbunden Schlagsahneerzeuger mit Auslaßventil, sowie einem weiteren Kessel für kühlzuhaltende Flüssigkeitsprodukte für den menschlichen Verzehr.

Die vorgenannte Vorrichtung eignet sich besonders zur Herstellung von Schlagsahne in Cafes, Konditoreien, Gaststätten od. dgl., in denen Schlagsahne ständig erzeugt und verabreicht werden muß.

Bei der Erzeugung von Eiskaffee oder anderen Flüssigprodukten für den menschlichen Verzehr besteht nun die Aufgabe, ständig mit der Erzeugung und Abfüllung von Schlagsahne kühlgehaltenen Kaffee oder andere Flüssigprodukte für den menschlichen Verzehr bereitzustellen. Diese mußten in besonderen Behältern, beispielsweise Thermoskannen, unterhalb des Sahneerzeugungsgerätes bereitgehalten und im Bedarfsfall von Hand abgefüllt werden, was verhältnismäßig umständlich ist.

Der vorliegenden Erfindung liegt nun die Aufgabe zugrunde, eine Vorrichtung der eingangs genannten Art zu schaffen, bei der der die Maschine Bedienende mit einfachen Handgriffen ein Mischgetränk, z. B. einen Eiskaffee mit Sahne, im gleichen Arbeitsbereich herstellen kann, wobei ihm so die Möglichkeit gegeben wird, z. B. kühlzuhaltenden Kaffee oder andere Flüssigkeiten für den menschlichen Verzehr und Sahne an nahe beieinanderliegenden Stellen bereitzuhalten und im Bedarfsfall zu entnehmen.

In der US-A-3 854 700 ist eine Schlagsahnemaschine der anfangs genannten Art beschrieben, bei der ein Sahnebehälter vorgesehen ist, von dem mittels eines Ansaugrohres durch eine Pumpe die Sahne angesaugt und in das eigentliche Schlagsahneerzeugerrohr geführt wird. Es ist ferner im gleichen Raum ein weiterer Behälter vorgesehen, der ein Zusatzmittel enthält, das in das Sahne-Luft-Gemisch vor dem eigentlichen Schlagsahneerzeuger eingeführt werden soll. Hierzu ist eine besondere Pumpe vorgesehen, die über ein Ventil mit dem Sahnekanal verbunden ist.

Die US-A- 4 766 739 betrifft ebenfalls eine Schlagsahnemaschine mit einem Behälter für die zu erzeugende Schlagsahne und weist keine Möglichkeit auf, in dem genannten Kühlraum einen weiteren Behälter für eine dem menschlichen Verzehr dienende und zu kühlende Flüssigkeit unterzubringen.

Zur Lösung der vorgenannten Aufgabe wird eine Vorrichtung der eingangs genannten Art vorgeschlagen, welche dadurch gekennzeichnet ist, daß der Kessel über eine Verbindungsleitung mit einem in der Frontplatte des Rahmengehäuses angeordneten Auslaßhahn verbunden und aus dem Raum herausnehmbar angeordnet ist und am Boden eine Ventilöffnung aufweist, die mit der Verbindungsleitung verbindbar ist und sich beim Einsetzen oder Entfernen des Kessels selbsttätig öffnet und schließt.

Eine vorteilhafte Weiterbildung der Vorrichtung gemäß der Erfindung besteht darin, daß der Kessel rechteckförmig ausgebildet ist und einen durch eine Gummidichtung dicht abschließbaren Deckel aufweist.

Mit der Vorrichtung gemäß der Erfindung wird der wesentliche Vorteil erzielt, daß ein Eiskaffee oder andere Flüssigprodukte für den menschlichen Verzehr schnell hergestellt werden kann, da der Auslaßhahn für den gekühlten Kaffee oder andere Flüssigprodukte für den menschlichen Verzehr sich in unmittelbarer Nähe des Auslaßventiles für die Schlagsahne befindet. Außerdem kann der Kühlraum zur Kühlung der Flüssigsahne innerhalb des Rahmengehäuses gleichzeitig als Kühlraum für den kühlzuhaltenden Kaffee oder andere Flüssigprodukte für den menschlichen Verzehr verwendet werden. Schließlich ist es von besonderem Vorteil, den Kessel für den kühlzuhaltenden Kaffee oder andere Flüssigprodukte für den menschlichen Verzehr mit einfachen Handgriffen und schnell aus dem genannten Raum zu entfernen, um beispielsweise an einer anderen Stelle Kaffee oder andere Flüssigprodukte für den menschlichen Verzehr nachzufüllen. Durch diese Maßnahme wird auch das Reinigungsproblem des Kessels in einfacher Weise gelöst.

Anhand der Zeichnung soll am Beispiel einer bevorzugten Ausführungsform die Vorrichtung gemäß der Erfindung näher erläutert werden.

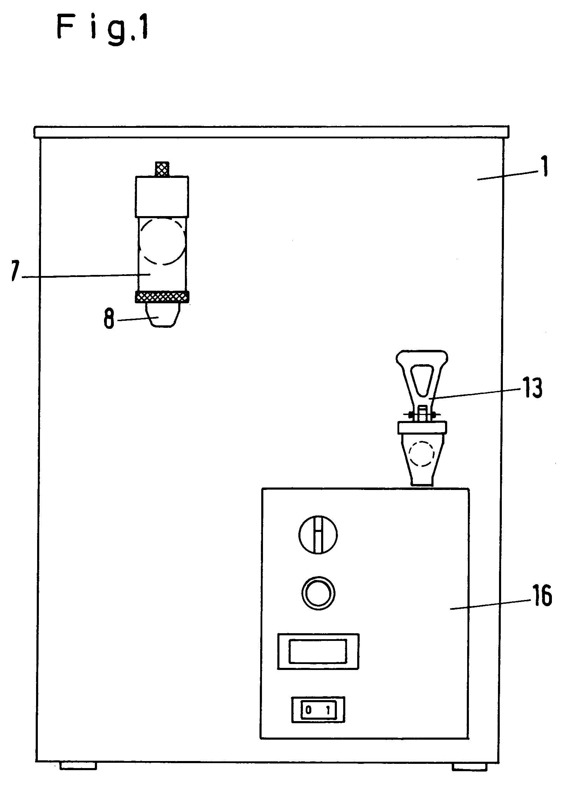

In der Zeichnung zeigt
- Fig. 1: eine Frontansicht,

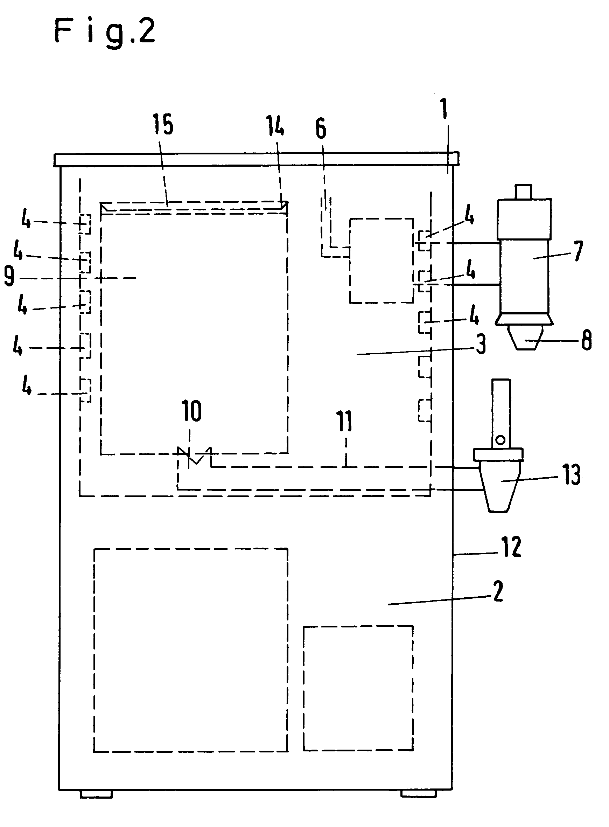

- Fig. 2: zeigt eine Seitenansicht, und

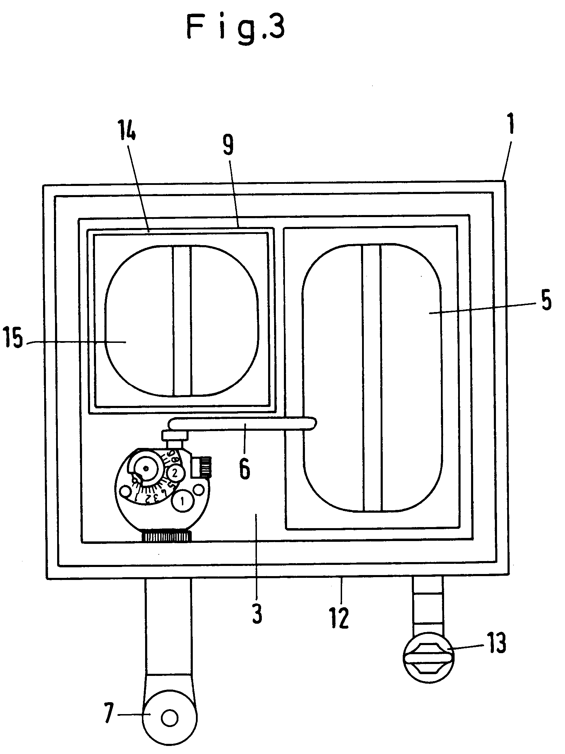

- Fig. 3: zeigt eine Draufsicht auf die Vorrichtung gemäß der Erfindung.

Die Vorrichtung gemäß der Erfindung besteht im wesentlichen aus einem Rahmengehäuse 1 mit einem ersten, unteren Raum 2, in dem sich das Kühlaggregat und die elektrischen Schalt- und Steuereinrichtungen befinden. Darüber ist ein Raum 3 vorgesehen, der Kälteübertragungseinrichtungen 4, beispielsweise Kühlschlangen, enthält, die mit dem Kühlaggregat im Raum 2 verbunden sind.

In dem oberen Raum 3 befindet sich ein Flüssig-Rahmkessel 5, der über eine Leitung 6 mit einem Sahneerzeuger 7 und einem Auslaßventil 8 in Verbindung steht.

In dem oberen Raum 3 befindet sich ein weiterer Kessel 9, der an der Unterseite ein selbstöffnendes und -schließbares Ventil 10 aufweist, dessen Öffnung auf eine Verbindungsleitung 11 aufgesetzt werden kann. Die Verbindungsleitung 11 führt zu einem an der Außenwand, insbesondere der Frontplatte 12, angeordneten Auslaßhahn 13. Der Kessel 9 ist mit einem eine Gummidichtung 14 aufweisenden Deckel 15 verschlossen.

Der Kessel 9 ist herausnehmbar angeordnet, und beim Herausnehmen desselben schließt sich das Ventil 10, so daß der darin befindliche Kaffee oder andere Flüssigprodukte für den menschlichen Verzehr nicht entweichen kann. Beim Aufsetzen des Kessels 9 auf die Verbindungsleitung 11 wird das Ventil wieder geöffnet, und der Kaffee oder andere Flüssigprodukte für den menschlichen Verzehr kann aus dem Auslaßhahn entnommen werden.

An der Frontplatte 12 ist noch eine Schaltplatte 16 vorgesehen, an der sich die Schaltelemente zum Einschalten und ggf. Steuern des Kühlaggregates befinden.

## Patentansprüche

1. Vorrichtung zum Erzeugen von Schlagsahne aus Flüssigsahne, bestehend aus einem Rahmengehäuse (1) mit einem ersten Raum (2) zur Aufnahme der Kühlaggregate und der elektrischen Schalt- und Steuereinrichtungen und einem mit Kälteübertragungseinrichtungen, z. B. Kühlschlangen, versehenen zweiten Raum (3) zur Aufnahme eines Kessels (5) für die kühlzuhaltende, flüssige Sahne und einem mit diesem über eine Leitung verbunden Schlagsahneerzeuger (7) mit Auslaßventil (8), sowie einem weiteren Kessel (9) für kühlzuhaltende Flüssigkeitsprodukte für den menschlichen Verzehr, **dadurch gekennzeichnet,** daß der weitere Kessel (9) über eine Verbindungsleitung (11) mit einem in der Frontplatte (12) des Rahmengehäuses (1) angeordneten Auslaßhahn (13) verbunden und aus dem Raum (3) herausnehmbar angeordnet ist und am Boden eine Ventilöffnung (10) aufweist, die mit der Verbindungsleitung (11) verbindbar ist und sich beim Einsetzen oder Entfernen des Kessels selbsttätig öffnet und schließt.

2. Vorrichtung nach Anspruch 1, **dadurch gekennzeichnet,** daß der Kessel (9) rechteckförmig ausgebildet ist und einen durch eine Gummidichtung (14) dicht abschließbaren Deckel (15) aufweist.

## Claims

1. Device for preparing whipped cream from liquid cream, consisting of a frame housing (1) with a first space (2) to receive the cooling unit and the electrical switch- and control-equipment and a second space (3), provided with cold-transfer devices, e.g. cooling coils, to receive a tank (5) for the liquid cream to be kept cool and a whipped cream maker (7), linked to this by a pipe, with an outlet valve (8), as well as a further tank (9) for liquid products for human consumption, to be kept cool, characterised in that the further tank (9) is linked via a connecting pipe (11) to an outlet tap (13) arranged in the front plate (12) of the frame housing (1) and is arranged to be removable from the space (3) and has a valve opening (10) at the bottom, which is connectible to the connecting pipe (11) and opens and closes automatically when the tank is inserted or removed.

2. Device according to claim 1, characterised in that the tank (9) is of a rectangular shape and has a lid (15) which may be tightly sealed by means of a rubber seal (14).

## Revendications

1. Appareil pour préparer de la crème fouettée à partir de crème liquide composé d'un boîtier (1) avec un premier compartiment (2) renfermant les unités frigorifiques et les dispositifs électriques de commutation et de commande et un second compartiment (3) muni de dispositifs de transfert de froid, par exemple des serpentins, qui contient un réservoir (5) pour la crème liquide à réfrigérer et d'un dispositif (7) pour préparer la crème fouettée muni d'une soupape d'évacuation (8) relié au réservoir par une conduite, de même qu'un second réservoir (9) pour des produits liquides destinés à être réfrigérés pour la consommation humaine, caractérisé en ce que le second réservoir (9) est relié par un conduit de raccordement (11) à un robinet d'évacuation (12) disposé dans le panneau frontal (12) du boîtier (1) et est disposé de manière à pouvoir être retiré du compartiment (3), et présente, dans le fond, une ouverture de soupape (10) pouvant être reliée au conduit de raccordement (11) et qui, lors de l'introduction ou du retrait du réservoir, s'ouvre et se ferme automatiquement.

2. Appareil selon la revendication 1, caractérisé en ce que le réservoir (9) est réalisé de manière rectangulaire et présente un couvercle (15) pouvant être fermé de manière étanche par un joint en caoutchouc (14).
